# FASCICULE DE BREVET EUROPEEN

(11) **EP 2 743 785 B1**
(45) Date de publication et mention de la délivrance du brevet: **17.12.2014**
(21) Numéro de dépôt: 13183155.4
(22) Date de dépôt: 05.09.2013
(51) Int. Cl.: G04G 17/04, G04G 17/08

(54) **Dispositif électronique portable flexible**
Flexible tragbare elektronische Vorrichtung
Flexible portable electronic device

(30) Priorité: 17.12.2012 EP 12197481
(43) Date de publication de la demande: 18.06.2014
(73) Titulaire: The Swatch Group Research and Development Ltd., 2074 Marin (CH)
(72) Inventeur: Heck, Pascal, 3235 Erlach (CH); Nicolas, Cédric, 2000 Neuchâtel (CH)
(74) Mandataire: Giraud, Eric

(56) Documents cités:
- WO-A1-2011/103317
- US-A1- 2001 043 513
- US-A1- 2003 026 171

## Description

La présente invention concerne un dispositif électronique portable flexible destiné à être porté autour d'une partie d'un corps d'un porteur tel qu'un poignet.

On connait déjà des dispositifs électroniques portables tels que des cartes à puce. Ces cartes à puce comprennent classiquement un ensemble électronique capable au moins d'élaborer une information. L'ensemble électronique se compose d'une pluralité de composants qui sont disposés les uns à côté des autres dans le plan de la carte à puce et qui sont noyés dans un matériau plastique qui confère à la carte à puce une forme et une résistance mécanique élevée. Dans la plupart des cas, ces cartes à puce sont fines et ne sont pas destinées à être soumises à des angles de flexion élevés en conditions d'utilisation normales. Par conséquent, les composants électroniques renfermés dans le corps de la carte à puce se déforment peu ou pas du tout et l'homogénéité de leur liaison avec le matériau plastique dans lequel est réalisé le corps de la carte à puce n'est pas menacée.

Il en va tout autrement lorsque le dispositif électronique portable flexible est destiné à être soumis à des angles de flexion élevés par exemple parce qu'il est enroulé autour d'un poignet d'un utilisateur. De tels dispositifs électroniques portables flexibles, par exemple du type montre-bracelet, comprennent un ensemble électronique d'élaboration et, le cas échéant, d'affichage de l'information qui se compose d'un dispositif d'affichage d'informations tel qu'un dispositif d'affichage à cristal liquide, d'un circuit imprimé flexible qui porte les composants intégrés et discrets nécessaires au bon fonctionnement du dispositif électronique portable, et d'une batterie d'alimentation électrique. Ces divers composants électroniques se présentent sous la forme d'éléments généralement plans et étendus, disposés les uns au-dessus des autres. Ils sont surmoulés avec un matériau plastique tel qu'un élastomère qui confère au dispositif électronique portable une épaisseur et une résistance mécanique.

On comprend que, lorsque le dispositif électronique portable est enroulé, le rayon de courbure des différents composants électroniques qui constituent l'ensemble électronique d'élaboration de l'information varie en fonction de la position de chacun de ces composants dans l'empilement des composants. Or, plus le rayon de courbure est faible, plus l'angle d'enroulement du composant correspondant est important. On peut donc observer des différences de longueurs d'enroulement selon la position et la longueur des composants. Toutefois, si les différents composants électroniques sont par exemple collés sur l'ensemble de leur surface, les différences de longueur doivent être compensées par l'élasticité des composants électroniques et les collages doivent résister aux fortes contraintes de cisaillement. Si l'élasticité des composants électroniques n'est pas suffisante ou si les collages ne résistent pas aux contraintes, le dispositif électronique portable est soumis à un flambage ou un délaminage qui conduit à sa destruction.

La demande internationale WO 2011/103317 divulgue une montre-bracelet souple comprenant une bande flexible inférieure et une bande flexible supérieure, la montre-bracelet souple comprenant un ensemble électronique pour élaborer l'information, l'ensemble électronique d'élaboration de l'information comprenant au moins un premier composant électronique avec une surface sensiblement plane, ce premier composant électronique étant logé entre la bande flexible inférieure et la bande flexible supérieure du corps souple, le premier composant électronique étant maintenu mécaniquement par son bord latéral avec l'une des bandes flexibles inférieure ou supérieure.

La présente invention a pour but de pallier ces inconvénients ainsi que d'autres encore en procurant un dispositif électronique portable flexible pouvant être enroulé autour d'une partie d'un corps d'un utilisateur selon des rayons de courbure très faibles sans risque de flambage ou de délaminage des composants électroniques qui composent l'ensemble électronique d'élaboration d'une information.

A cet effet, la présente invention concerne un dispositif électronique portable flexible capable d'élaborer une information, ce dispositif électronique portable flexible comprenant un corps souple agencé pour pouvoir être fixé à une partie d'un corps d'un utilisateur, le corps souple comprenant une bande flexible inférieure et une bande flexible supérieure, ces bandes flexibles définissant un axe longitudinal de symétrie du dispositif électronique portable flexible, le dispositif électronique portable flexible comprenant un ensemble électronique pour élaborer l'information, l'ensemble électronique d'élaboration de l'information comportant au moins un premier composant électronique avec une surface sensiblement plane, ce premier composant électronique étant logé entre la bande flexible inférieure et la bande flexible supérieure du corps souple, le dispositif électronique portable flexible étant **caractérisé en ce que** le premier composant électronique est maintenu mécaniquement avec l'une des bandes flexibles inférieure ou supérieure par un seul de ses côtés transversaux à l'axe longitudinal de symétrie du dispositif électronique portable flexible.

Selon une caractéristique complémentaire de l'invention, l'ensemble électronique d'élaboration de l'information comprend un deuxième composant électronique avec une surface sensiblement plane, le deuxième composant électronique étant disposé sensiblement sous le premier composant électronique, le deuxième composant électronique étant maintenu mécaniquement avec le premier composant électronique sur une partie de sa surface seulement et par un seul de ses côtés transversaux à l'axe longitudinal de symétrie du dispositif électronique portable flexible.

Selon une autre caractéristique de l'invention, l'ensemble électronique d'élaboration de l'information comprend un deuxième composant électronique avec une surface sensiblement plane, le deuxième composant électronique étant disposé sensiblement dans le prolongement du premier composant électronique, le deuxième composant électronique étant relié au premier composant électronique au moyen d'un connecteur élastique.

Grâce à ces caractéristiques, la présente invention procure un dispositif électronique portable flexible dans lequel le ou les composants électroniques d'élaboration d'une information sont maintenus mécaniquement entre eux ou avec l'une des bandes flexibles inférieure ou supérieure du corps souple selon une partie seulement de leur surface. Les composants électroniques d'élaboration d'une information sont donc peu ou pas liés avec le matériau plastique dans lequel est réalisé le dispositif électronique portable flexible selon l'invention, de sorte que les risques de flambage ou de délamination sont négligeables. En outre, les composants électroniques d'élaboration d'une information conservent leur faculté de se déformer élastiquement, ce qui leur permet de coulisser les uns par rapport aux autres et d'augmenter leur angle d'enroulement pour absorber les contraintes dues au fléchissement du dispositif électronique portable.

D'autres caractéristiques et avantages de la présente invention ressortiront plus clairement de la description détaillée qui suit d'un mode de réalisation du dispositif électronique portable flexible selon l'invention, cet exemple étant donné à titre purement illustratif et non limitatif seulement en liaison avec le dessin annexé sur lequel :
- la figure 1 est une vue en coupe longitudinale du dispositif électronique portable flexible selon l'invention au repos, et
- la figure 2 est une vue analogue à celle de la figure 1 montrant le dispositif électronique portable flexible en position courbée.

La présente invention procède de l'idée générale inventive qui consiste à procurer un dispositif électronique portable flexible dans lequel les composants électroniques d'élaboration d'une information sont maintenus mécaniquement les uns avec les autres ou avec l'une des bandes flexibles du corps souple du dispositif électronique portable par une partie seulement de leur surface. Lorsque le dispositif électronique portable est fléchi pour s'adapter par exemple au profil d'un poignet d'un utilisateur, les composants électroniques conservent leur faculté de se déformer élastiquement et d'augmenter leur angle d'enroulement dans un mouvement de glissement des uns par rapport aux autres. En effet, la surface par laquelle les composants électroniques sont maintenus mécaniquement entre eux ou avec le corps souple du dispositif électronique portable est faible, de sorte que l'homogénéité de la liaison entre les composants électroniques et le matériau plastique dans lequel est réalisé le corps souple n'est pas menacée et les risques de flambage ou de délaminage des composants électroniques sont pratiquement totalement évités.

Au sens de l'invention, on entend par maintien mécanique notamment le collage selon une partie de sa surface seulement d'un premier composant électronique avec un second composant électronique ou avec l'une des bandes flexibles du corps souple du dispositif électronique portable flexible selon l'invention. D'autres techniques de solidarisation comme par exemple le soudage, en particulier le thermo-soudage, peuvent également être envisagées dans le cadre de la présente invention. Il peut également être envisagé d'assurer le maintien mécanique de deux composants électroniques entre eux ou avec l'une des bandes flexibles du corps souple au moyen de crochets.

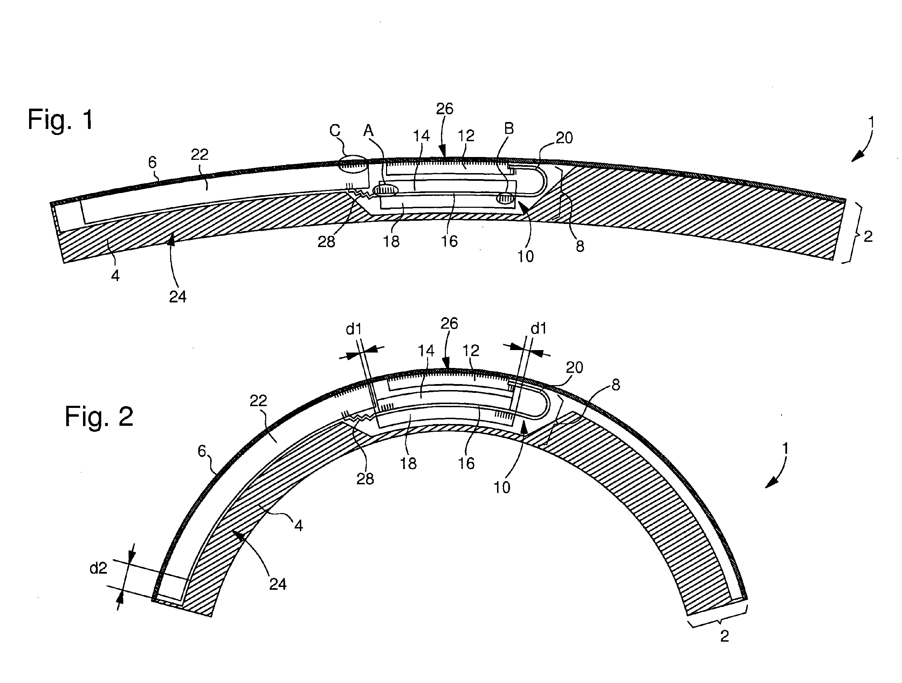

Les figures 1 et 2 annexées à la présente demande de brevet sont des vues en coupe longitudinale du dispositif électronique portable flexible selon l'invention, respectivement au repos et en position fléchie pour s'adapter au profil d'une partie d'un corps d'un utilisateur comme, par exemple, un poignet.

Désigné dans son ensemble par la référence numérique générale 1, le dispositif électronique portable selon l'invention est flexible. Le dispositif électronique portable 1 comprend un corps souple 2 qui présente sensiblement la forme d'une bande ou d'un bracelet et qui se compose d'une bande flexible inférieure 4 et d'une bande flexible supérieure 6. La bande flexible inférieure 4 peut être réalisée en tout matériau plastique tel qu'un élastomère. La bande flexible supérieure 6 se présente sous la forme d'un film plastique étanche solidarisé sur la bande flexible inférieure 4. La solidarisation de la bande flexible supérieure 6 sur la bande flexible inférieure 4 peut se faire de toute manière appropriée comme le collage ou le thermo-soudage.

Le dispositif électronique portable 1 a pour fonction de pouvoir au moins élaborer une information et, dans l'exemple préféré, élaborer et afficher une telle information. A cet effet, le dispositif électronique portable 1 comprend un ensemble électronique 8 d'élaboration d'une information monté sur la bande flexible supérieure 6, du côté où est fixée la bande flexible inférieure 4. A cette fin, la bande flexible inférieure 4 présente, en un endroit de sa longueur, un logement 10 dans lequel est disposé l'ensemble électronique 8 pour élaborer et afficher une information.

Dans l'exemple représenté au dessin, l'ensemble électronique 8 d'élaboration et d'affichage d'une information comprend un empilement de composants électroniques au premier rang desquels on peut citer un dispositif d'affichage 12 tel qu'une cellule à cristal liquide sous laquelle est disposé un guide de lumière 14 prévu pour éclairer le dispositif d'affichage 12 par l'arrière. Le montage est complété par un circuit imprimé flexible 16 sur laquelle sont montés les divers composants électroniques intégrés et discrets (non représentés au dessin) nécessaires au bon fonctionnement du dispositif électronique portable 1, en particulier une base de temps. Le circuit imprimé flexible 16, disposé sous le guide de lumière 14, est relié au dispositif d'affichage 12, au guide de lumière 14 ainsi qu'à un accumulateur rechargeable 18 au moyen d'une pluralité de connecteurs 20. L'accumulateur rechargeable 18, disposé sous le circuit imprimé flexible 16, au fond du logement 10, est alimenté par au moins une cellule solaire 22 qui est avantageusement logée dans l'un des brins 24 du bracelet.

Dans ce qui suit, on notera que les zones de maintien mécanique ont été représentées par des zones hachurées entourées d'un cercle sur la figure 1.

Le montage de l'ensemble électronique 8 d'élaboration et d'affichage d'une information s'opère de la manière suivante. Tout d'abord, la cellule d'affichage à cristal liquide 12 est collée sur toute sa surface supérieure 26 contre la surface inférieure de la bande flexible supérieure 6 au moyen d'une colle optiquement transparente, encore connue sous sa dénomination anglo-saxonne Optically Clear Adhesive ou OCA. On comprendra en effet que, pour des raisons de qualité d'affichage, la surface supérieure 26 de la cellule d'affichage à cristal liquide 12 doit être en contact intime avec la bande flexible supérieure 6 qui la recouvre.

Conformément à l'invention, le montage se poursuit par le collage, sur une partie de sa surface seulement, du circuit imprimé 16 sur la face arrière du guide de lumière 14. La zone de collage, hachurée, est entourée d'un cercle sur les figures et désignée par la référence alphabétique A. En remarquant que le circuit imprimé flexible 16 est un composant électronique généralement rectangulaire et de surface sensiblement plane, on comprendra que le circuit imprimé flexible 16 est collé selon un seul de ses côtés transversal à l'axe de symétrie longitudinale du bracelet. Par conséquent, lorsque le dispositif électronique portable 1 est courbé pour être adapté par exemple à un poignet d'un utilisateur, le circuit imprimé flexible 16 est apte à se déformer élastiquement et à modifier son angle d'enroulement en effectuant un mouvement de glissement par rapport au guide de lumière 14.

De même, l'accumulateur rechargeable 18 est collé sur une partie de sa surface seulement sur la face arrière du circuit imprimé flexible 16. La zone de collage, hachurée, est entourée d'un cercle sur les figures et désignée par la référence alphabétique B. Si, comme déjà expliqué ci-dessus en liaison avec le circuit imprimé flexible 16, on remarque que l'accumulateur rechargeable 18 est un composant électronique plan de forme générale rectangulaire, on voit à l'examen des figures que l'accumulateur rechargeable 18 est collé selon un unique côté transversal à l'axe de symétrie longitudinale du bracelet. Comme l'accumulateur rechargeable 18 est collé selon une faible fraction de sa surface seulement, cela l'autorise à se déformer élastiquement et à modifier son angle d'enroulement en effectuant un mouvement de glissement relativement au circuit imprimé 16 lorsque le dispositif électronique portable 1 est enroulé par exemple autour d'un poignet d'un utilisateur. Plus précisément, on voit sur la figure 2 qu'une extrémité de l'accumulateur rechargeable 18 qui est aligné avec le circuit imprimé flexible 16 en position de repos du dispositif électronique portable 1, s'est déplacé d'une longueur d1 par rapport aux extrémités du guide de lumière 14 en position courbée du dispositif électronique portable 1.

Enfin, la cellule solaire 22 est colée localement sur la face inférieure de la bande flexible supérieure 6. La zone de collage, hachurée, est entourée d'un cercle et désignée par la référence alphabétique C sur les dessins. On remarque à l'examen des dessins que la cellule solaire 22 est un composant électronique sensiblement plan et de forme généralement rectangulaire qui est collé seulement par un côté transversal à l'axe de symétrie longitudinale du dispositif électronique portable 1. Par conséquent, lorsque le dispositif électronique portable 1 est courbé pour être adapté, par exemple, à un poignet d'un utilisateur, l'intégrité de la liaison entre la cellule solaire 22 et le matériau dans lequel est réalisé le corps souple du dispositif électronique portable 1 n'est pas menacée. Bien au contraire, la cellule solaire 22 est libre de se déformer élastiquement et de modifier son arc d'enroulement d'une longueur d2 lorsque le dispositif électronique portable 1 est recourbé.

Enfin, on voit à l'examen des dessins que la cellule solaire 22 et le circuit imprimé flexible 16 sont disposés à la suite l'un de l'autre selon la direction longitudinale du dispositif électronique portable 1, la cellule solaire 22 étant disposée à un niveau légèrement plus haut que le circuit imprimé flexible 16. Pour tenir compte de la variation de la longueur de l'arc entre la cellule solaire 22 et le circuit imprimé flexible 16 lorsque le dispositif électronique portable 1 est fléchi pour être fixé par exemple à une partie d'un corps d'un utilisateur, la cellule solaire 22 et le circuit imprimé flexible16 sont reliés entre eux par un connecteur électrique 28 qui présente une élasticité. En se déformant élastiquement, le connecteur électrique 28 permet d'absorber les variations de longueur l'arc du circuit imprimé flexible16 et de la cellule solaire 22 lorsque le dispositif électronique portable 1 est recourbé.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, au sens de la présente invention, le maintien mécanique peut être réalisé au choix par solidarisation, typiquement collage, soudage ou encore thermo-soudage, ou bien à l'aide de crochets du type clips.

## Revendications

1. Dispositif électronique portable flexible capable d'élaborer une information, ce dispositif électronique portable flexible (1) comprenant un corps souple (2) agencé pour pouvoir être fixé à une partie d'un corps d'un utilisateur, le corps souple (2) comprenant une bande flexible inférieure (4) et une bande flexible supérieure (6), ces bandes flexibles définissant un axe longitudinal de symétrie du dispositif électronique portable flexible (1), le dispositif électronique portable flexible (1) comprenant un ensemble électronique (8) pour élaborer l'information, l'ensemble électronique (8) d'élaboration de l'information comportant au moins un premier composant électronique avec une surface sensiblement plane, ce premier composant électronique étant logé entre la bande flexible inférieure (4) et la bande flexible supérieure (6) du corps souple (2), le dispositif électronique portable flexible (1) étant **caractérisé en ce que** le premier composant électronique est maintenu mécaniquement avec l'une des bandes flexibles inférieure (4) ou supérieure (6) par un seul de ses côtés transversaux à l'axe longitudinal de symétrie du dispositif électronique portable flexible (1).

2. Dispositif électronique portable flexible selon la revendication 1, **caractérisé en ce que** le premier composant électronique est une cellule solaire (22) solidarisé sur une partie de sa surface seulement avec la bande flexible supérieure (6).

3. Dispositif électronique portable flexible selon l'une quelconque des revendications 1 ou 2, **caractérisé en ce que** l'ensemble électronique (8) d'élaboration de l'information comprend un deuxième composant électronique (16) avec une surface sensiblement plane, le deuxième composant électronique (16) étant disposé sensiblement sous un troisième composant électronique (14), le deuxième composant électronique (16) étant maintenu mécaniquement sur une partie de sa surface seulement avec le troisième composant électronique (14).

4. Dispositif électronique portable selon la revendication 3, **caractérisé en ce que** le deuxième composant électronique est un circuit imprimé flexible (16) et **en ce que** le troisième composant électronique est un guide de lumière (14) disposé sous un dispositif d'affichage (12).

5. Dispositif électronique portable flexible selon la revendication 4, **caractérisé en ce que** l'ensemble électronique (8) d'élaboration de l'information comprend un accumulateur rechargeable (18) disposé sous le circuit imprimé flexible (16) et solidarisé sur une partie de sa surface seulement avec le circuit imprimé flexible (16).

6. Dispositif électronique portable flexible selon l'une quelconque des revendications 2 à 5, **caractérisé en ce que** le deuxième composant électronique est disposé sensiblement dans le prolongement du premier composant électronique, le deuxième composant électronique étant relié au premier composant électronique au moyen d'un connecteur électrique élastique.

7. Dispositif électronique portable flexible capable d'élaborer une information, ce dispositif électronique portable flexible (1) comprenant un corps souple (2) agencé pour pouvoir être fixé à une partie d'un corps d'un utilisateur, le corps souple (2) comprenant une bande flexible inférieure (4) et une bande flexible supérieure (6), ces bandes flexibles définissant un axe longitudinal de symétrie du dispositif électronique portable (1), le dispositif électronique portable flexible (1) comprenant un ensemble électronique (8) pour élaborer l'information, l'ensemble électronique (8) d'élaboration de l'information comportant au moins un deuxième composant électronique (16) avec une surface sensiblement plane, ce deuxième composant électronique étant logé entre la bande flexible inférieure (4) et la bande flexible supérieure (6) du corps souple (2), le deuxième composant électronique (16) étant disposé sensiblement sous un troisième composant électronique (14), le dispositif électronique portable flexible (1) étant **caractérisé en ce que** le deuxième composant électronique (16) est maintenu mécaniquement avec le troisième composant électronique (14) sur une partie seulement de sa surface et par un seul de ses côtés transversaux à l'axe longitudinal de symétrie du dispositif électronique portable flexible (1).

8. Dispositif électronique portable selon la revendication 7, **caractérisé en ce que** le deuxième composant électronique est un circuit imprimé flexible (16) et **en ce que** le troisième composant électronique est un guide de lumière (14) disposé sous un dispositif d'affichage (12).

9. Dispositif électronique portable flexible selon la revendication 8, **caractérisé en ce que** l'ensemble électronique (8) d'élaboration de l'information comprend un accumulateur rechargeable (18) disposé sous le circuit imprimé flexible (16) et solidarisé sur une partie de sa surface seulement avec le circuit imprimé flexible (16).

10. Dispositif électronique portable flexible selon l'une quelconque des revendications 7 à 9, **caractérisé en ce que** le deuxième composant électronique est disposé sensiblement dans le prolongement d'un premier composant électronique avec une surface sensiblement plane, ce premier composant électronique étant logé entre la bande flexible inférieure (4) et la bande flexible supérieure (6) du corps souple (2), le premier composant électronique étant maintenu mécaniquement avec l'une des bandes flexibles inférieure (4) ou supérieure (6) par un seul de ses côtés transversaux à l'axe longitudinal de symétrie du dispositif électronique portable flexible (1), le deuxième composant électronique étant relié au premier composant électronique au moyen d'un connecteur électrique élastique.

## Patentansprüche

1. Biegsame tragbare elektronische Vorrichtung, die eine Information verarbeiten kann, wobei diese biegsame tragbare elektronische Vorrichtung (1) einen nachgiebigen Körper (2) umfasst, der dafür ausgelegt ist, an einem Teil des Körpers eines Benutzers befestigt werden, wobei der nachgiebige Körper (2) ein unteres biegsames Band (4) und ein oberes biegsames Band (6) aufweist, wobei diese biegsamen Bänder eine longitudinale Symmetrieachse der biegsamen tragbaren elektronischen Vorrichtung (1) definieren, wobei die biegsame tragbare elektronische Vorrichtung (1) eine elektronische Anordnung (8) umfasst, um die Information zu verarbeiten, wobei die elektronische Anordnung (8) zum Verarbeiten der Information wenigstens eine erste elektronische Komponente mit einer im Wesentlichen ebenen Oberfläche aufweist, wobei diese erste elektronische Komponente zwischen dem unteren biegsamen Band (4) und dem oberen biegsamen Band (6) des nachgiebigen Körpers (2) untergebracht ist, wobei die biegsame tragbare elektronische Vorrichtung (1) **dadurch gekennzeichnet ist, dass** die erste elektronische Komponente entweder mit dem unteren (4) oder mit dem oberen (6) biegsamen Band auf einer einzigen ihrer Seiten quer zu der longitudinalen Symmetrieachse der biegsamen tragbaren elektronischen Vorrichtung (1) mechanisch gehalten wird.

2. Biegsame tragbare elektronische Vorrichtung nach Anspruch 1, **dadurch gekennzeichnet, dass** die erste elektronische Komponente eine Solarzelle (22) ist, die nur auf einem Teil ihrer Oberfläche an dem oberen biegsamen Band (6) befestigt ist.

3. Biegsame tragbare elektronische Vorrichtung nach einem der Ansprüche 1 oder 2, **dadurch gekennzeichnet, dass** die elektronische Anordnung (8) für die Erzeugung der Information eine zweite elektronische Komponente (16) mit einer im Wesentlichen ebenen Oberfläche aufweist, wobei die zweite elektronische Komponente (16) im Wesentlichen unter einer dritten elektronischen Komponente (14) angeordnet ist, wobei die zweite elektronische Komponente (16) nur auf einem Teil ihrer Oberfläche mit der dritten elektronischen Komponente (14) gehalten wird.

4. Tragbare elektronische Vorrichtung nach Anspruch 3, **dadurch gekennzeichnet, dass** die zweite elektronische Komponente eine biegsame gedruckte Schaltung (16) ist und dass die dritte elektronische Komponente ein Lichtleiter (14) ist, der unter einer Anzeigevorrichtung (12) angeordnet ist.

5. Biegsame tragbare elektronische Vorrichtung nach Anspruch 4, **dadurch gekennzeichnet, dass** die elektronische Anordnung (8) für die Erzeugung der Information einen wiederaufladbaren Akkumulator (18) umfasst, der unter der biegsamen gedruckten Schaltung (16) angeordnet ist und nur an einem Teil seiner Oberfläche an der biegsamen gedruckten Schaltung (16) befestigt ist.

6. Biegsame tragbare elektronische Vorrichtung nach einem der Ansprüche 2 bis 5, **dadurch gekennzeichnet, dass** die zweite elektronische Komponente im Wesentlichen in der Verlängerung der ersten elektronischen Komponente angeordnet ist, wobei die zweite elektronische Komponente mit der ersten elektronischen Komponente mittels eines elastischen elektrischen Verbinders verbunden ist.

7. Biegsame tragbare elektronische Vorrichtung, die eine Information verarbeiten kann, wobei diese biegsame tragbare elektronische Vorrichtung (1) einen nachgiebigen Körper (2) aufweist, der dafür ausgelegt ist, an einem Teil des Körpers eines Benutzers befestigt werden zu können, wobei der nachgiebige Körper (2) ein unteres nachgiebiges Band (4) und ein oberes nachgiebiges Band (6) umfasst, wobei diese nachgiebigen Bänder eine longitudinale Symmetrieachse der tragbaren elektronischen Vorrichtung (1) definieren, wobei die biegsame tragbare elektronische Vorrichtung (1) eine elektronische Anordnung (8) umfasst, um die Information zu verarbeiten, wobei die elektronische Anordnung (8) für die Erzeugung der Information wenigstens eine zweite elektronische Komponente (16) mit einer im Wesentlichen ebenen Oberfläche aufweist, wobei diese zweite elektronische Komponente zwischen dem unteren biegsamen Band (4) und dem oberen biegsamen Band (6) des nachgiebigen Körpers (2) untergebracht ist, wobei die zweite elektronische Komponente (16) im Wesentlichen unter einer dritten elektronischen Komponente (14) angeordnet ist, wobei die biegsame tragbare elektronische Vorrichtung (1) **dadurch gekennzeichnet ist, dass** die zweite elektronische Komponente (16) mit der dritten elektronischen Komponente (14) nur an einem Teil ihrer Oberfläche und durch eine einzige ihrer Seiten quer zu der longitudinalen Symmetrieachse der biegsamen tragbaren elektronischen Vorrichtung (1) mechanisch gehalten wird.

8. Tragbare elektronische Vorrichtung nach Anspruch 7, **dadurch gekennzeichnet, dass** die zweite elektronische Komponente eine biegsame gedruckte Schaltung (16) ist und dass die dritte elektronische Komponente ein Lichtleiter (14) ist, der unter einer Anzeigevorrichtung (12) angeordnet ist.

9. Biegsame tragbare elektronische Vorrichtung nach Anspruch 8, **dadurch gekennzeichnet, dass** die elektronische Anordnung (8) für die Erzeugung der Information einen wieder aufladbaren Akkumulator (18) umfasst, der unter der biegsamen gedruckten Schaltung (16) angeordnet ist und nur auf einem Teil seiner Oberfläche an der biegsamen gedruckten Schaltung (16) befestigt ist.

10. Biegsame tragbare elektronische Vorrichtung nach einem der Ansprüche 7 bis 9, **dadurch gekennzeichnet, dass** die zweite elektronische Komponente im Wesentlichen in der Verlängerung einer ersten elektronischen Komponente mit einer im Wesentlichen ebenen Oberfläche angeordnet ist, wobei diese erste elektronische Komponente zwischen dem unteren biegsamen Band (4) und dem oberen biegsamen Band (6) des nachgiebigen Körpers (2) untergebracht ist, wobei die erste elektronische Komponente mit dem unteren (4) oder dem oberen (6) nachgiebigen Band durch eine einzige ihrer Seiten quer zu der longitudinalen Symmetrieachse der biegsamen tragbaren elektronischen Vorrichtung mechanisch gehalten wird, wobei die zweite elektronische Komponente mit der ersten elektronischen Komponente mittels eines elastischen elektrischen Verbinders verbunden ist.

## Claims

1. Flexible portable electronic device capable of elaborating information, the flexible portable electronic device (1) including a flexible body (2) arranged to be capable of being secured to a part of a user's body, the flexible body (2) including a lower flexible band (4) and an upper flexible band (6), these flexible bands defining a longitudinal axis of symmetry of the flexible portable electronic device (1), the flexible portable electronic device (1) including an electronic assembly (8) for processing information, the electronic assembly (8) for processing information including at least a first electronic component with a substantially flat surface, the first electronic component being housed between the lower flexible band (4) and the upper flexible band (6) of the flexible body (2), the flexible portable electronic device (1) being **characterized in that** the first electronic component is mechanically held to one of the upper (6) or lower (4) flexible bands by only one of the sides thereof transverse to the longitudinal axis of symmetry of the flexible portable electronic device (1).

2. Flexible portable electronic device according to claim 1, **characterized in that** the first electronic component is a solar cell (22) secured on only one portion of the surface thereof to the upper flexible band (6).

3. Flexible portable electronic device according to any of claims 1 or 2, **characterized in that** the electronic assembly (8) for processing information includes a second electronic component (16) with a substantially flat surface, the second electronic component (16) being arranged substantially underneath a third electronic component (14), the second electronic component (16) being mechanically held on only one portion of the surface thereof to the first electronic component (14).

4. Portable electronic device according to claim 3, **characterized in that** the second electronic component is a flexible printed circuit (16) and **in that** the third electronic component is a light guide (14) arranged underneath a display device (12).

5. Flexible portable electronic device according to claim 4, **characterized in that** the electronic assembly (8) for processing information includes a rechargeable accumulator (18) arranged underneath the flexible printed circuit (16) and secured on only one portion of the surface thereof to the flexible printed circuit (16).

6. Flexible portable electronic circuit according to any of claims 2 to 5, **characterized in that** the second electronic component is arranged substantially in the extension of the first electronic component, the second electronic component being connected to the first electronic component by means of a resilient electrical connector.

7. Flexible portable electronic device capable of elaborating information, the flexible portable electronic device (1) including a flexible body (2) arranged to be capable of being secured to a part of a user's body, the flexible body (2) including a lower flexible band (4) and an upper flexible band (6), these flexible bands defining a longitudinal axis of symmetry of the flexible portable electronic device (1), the flexible portable electronic device (1) including an electronic assembly (8) for processing information, the electronic assembly (8) for processing information including at least a second electronic component (16) with a substantially flat surface, the second electronic component being housed between the lower flexible band (4) and the upper flexible band (6) of the flexible body (2), the second electronic component (16) being arranged substantially underneath a third electronic component (14), the flexible portable electronic device (1) being **characterized in that** the second electronic component (16) is mechanically held to the third electronic component (14) on only one portion of the surface thereof and by only one of the sides thereof transverse to the longitudinal axis of symmetry of the flexible portable electronic device (1).

8. Portable electronic device according to claim 7, **characterized in that** the second electronic component is a flexible printed circuit (16) and **in that** the third electronic component is a light guide (14) arranged underneath a display device (12).

9. Flexible portable electronic device according to claim 8, **characterized in that** the electronic assembly (8) for processing information includes a rechargeable accumulator (18) arranged underneath the flexible printed circuit (16) and secured on only one portion of the surface thereof to the flexible printed circuit (16).

10. Flexible portable electronic circuit according to any of claims 7 to 9, **characterized in that** the second electronic component is arranged substantially in the extension of a first electronic component with a substantially plane surface, said first electronic component being housed between the lower flexible band (4) and the upper flexible band (6) of the flexible body (2), the first electronic component being mechanically held to one of the lower (4) and upper (6) flexible bands by only one of the sides thereof transverse to the longitudinal axis of symmetry of the flexible portable electronic device (1), the second electronic component being connected to the first electronic component by means of a resilient electrical connector.
